# EUROPEAN PATENT APPLICATION

(11) **EP 2 738 858 A1**
(43) Date of publication of application: **04.06.2014**
(21) Application number: 13185737.7
(22) Date of filing: 24.09.2013
(51) Int. Cl.: H01M 8/02, C23C 18/32, C25B 9/00, H01M 8/12

(54) **Co-deposition and cathodic precipitation of oxides in Solid Oxide Cell stack element**

(71) Applicant: Topsoe Energy Conversion & Storage A/S, 2800 Kgs. Lyngby (DK)
(72) Inventor: Holt Nørby, Tobias, 2600 Glostrup (DK); Harthøj, Anders, 2820 Gentofte (DK); Weichel, Steen, 2970 Hørsholm (DK)
(74) Representative: Christensen, Bent

(57) **Abstract**

A metal element in a Solid Oxide Cell stack comprises particles which are co-deposited or oxides/hydroxides which are cathodic precipitated onto the surface to increase oxidation resistance and electrical conductivity, the metal element may advantageously be electropolished prior to the co-deposition and or cathodic precipitation.

## Description

The present invention relates to electrochemical conversion cells of the solid oxide type, Solid Oxide Cells (SOC) and stacks thereof for use as Solid Oxide Fuel Cell (SOFC) stacks or as Solid Oxide Electrolysis (SOEC) stacks. More particularly, the present invention relates to SOC stacks with metal elements with enhanced oxidation resistance.

In particular the present invention relates to interconnects and spacer elements of metal with a surface pretreatment and subsequent application of a layer onto the surface.

In the following the invention will be described in relation to a solid oxide fuel cell (SOFC) or a solid oxide electrolyser cell (SOEC).

The solid oxide fuel cell comprises a solid electrolyte that enables the conduction of oxygen ions, a cathode where oxygen is reduced to oxygen ions and an anode where hydrogen is oxidised. The overall reaction in an SOFC is that hydrogen and oxygen react electrochemically to produce electricity, heat and water. In order to produce the requisite hydrogen, the anode normally possesses catalytic activity for the steam reforming of hydrocarbons, particularly natural gas, whereby hydrogen, carbon monoxide and carbon dioxide are generated. Steam reforming of methane, the main component of natural gas, can be described by the following equations:

CH₄ + H₂O → CO + 3 H₂

CH₄ + CO₂ → 2 CO + 2 H₂

CO + H₂O → CO₂ + H₂

During operation an oxidant, such as air, is supplied to the solid oxide fuel cell in the cathode region. Fuel, such as hydrogen, is supplied in the anode region of the fuel cell. Alternatively, a hydrocarbon fuel, such as methane, is supplied in the anode region, where it is converted to hydrogen and carbon oxides through the above reactions. Hydrogen passes through the porous anode and reacts at the anode/electrolyte interface with oxygen ions generated on the cathode side that have diffused through the electrolyte. Oxygen ions are created at the cathode side with an input of electrons from the external electrical circuit of the cell.

In order to increase the voltage, several individual cells (cell units) are assembled to form a cell stack, and they are linked together by interconnects. An interconnect serves as a gas barrier to separate the anode (fuel) and cathode (air/oxygen) sides of adjacent cell units, and at the same time it enables current conduction between adjacent cells, i.e. between an anode of one cell unit with a surplus of electrons and a cathode of a neighbouring cell unit in need of electrons for the reduction process. Interconnects are normally provided with a plurality of flow paths for the passage of fuel gas on one side of the interconnect and oxidant gas on the opposite side. To optimize the performance of an SOFC stack, a range of positive factors should be maximized without unacceptable consequences on another range of related negative factors, which should be minimized. Among the factors to be maximized are fuel utilization, electrical efficiency and life time, whereas factors to be minimized are production price, dimensions, production time, failure rate and the number of components.

The interconnect has a direct influence on most of the factors mentioned. Therefore, both the configuration and the characteristics of the interconnect are of considerable importance to the function of the cell stack.

It is often desirable to provide the interconnect with a protective coating in order to improve the characteristics of the interconnect. Due to the challenging operation conditions of an SOC stack with high temperatures in an oxidising environment, metal interconnects as well as metal spacers and further metal elements in the SOC stack is subject to high temperature oxidation. To prolong the lifetime and retaining the necessary electrical contact and conduction properties, various alloys, surface treatments and coatings have been proposed.

US2007015029A discloses electrically conductive bipolar plates comprising an alloy comprising Fe and Cr. Respective surface portions of the bipolar plates are provided with electrically conductive, corrosion resistant layers that are placed in contact with portions of the electrochemical conversion cells. The corrosion resistant electrically conductive layers may comprise graphitic layers characterized predominantly by sp2 hybridized carbon-carbon bonding, molybdenum doped indium oxide layers, an electrically conductive Cr+N layer, or an electrically conductive MoSi2 layer.

In US2008032172 a solid oxide fuel cell stack is described that contains a plurality of fuel cells, each of which includes an anode and a cathode disposed on opposite sides of a solid electrolyte, and an electrically conductive interconnect disposed between the anode and cathode. The interconnect includes a substrate and a first surface in electrical contact with the anode and a second surface in electrical contact with the cathode, wherein at least a portion of at least one of the surfaces includes cobalt.

US2006285993 describes various embodiments relating to interconnects for solid oxide fuel cells ("SOFCs") comprising ferritic stainless steel and having at least one via that when subjected to an oxidizing atmosphere at an elevated temperature develops a scale comprising a manganese-chromate spinel on at least a portion of a surface thereof, and at least one gas flow channel that when subjected to an oxidizing atmosphere at an elevated temperature develops an aluminium-rich oxide scale on at least a portion of a surface thereof. Other embodiments relate to interconnects comprising a ferritic stainless steel and having a fuel side comprising metallic material that resists oxidation during operation of the SOFCs, and optionally include a nickel-base super alloy on the oxidant side thereof. Still other embodiments relate to ferritic stainless steels adapted for use as interconnects comprising less than or equal to 0.1 weight percent aluminium and/or silicon, and>1 up to 2 weight percent manganese.

Despite the above known art attempts to solve the mentioned problems there is however a need for a metal element coating for an SOC stack which to a higher degree retards oxidation and enhances the electrical conductivity of the metal element, in particular ferritic chromium steel.

This is solved by the present invention according to the claims set and as explained in the following.

The present invention is a Solid Oxide Cell (SOC) stack with at least one metal element. The metal element can be any known component of metal used in the stack, such as a spacer element, an interconnect also known as a flow field or a bipolar plate, a flow guide, an end plate, a current collector, a manifold (internal or external) to mention some. The metal can in one embodiment be ferritic chromium steel. According to the invention, the coating of the metal element comprises particles, oxides and or hydroxides which either are co-deposited or cathodic precipitated onto at least one of the surfaces of the metal element. In high temperature oxidising atmosphere the deposited metal ceramic composite coating will transform to a mixed oxide coating which will reduce the oxidation rate and enhance the electrical conductivity of the metal element. This is difficult to obtain with other methods especially regarding edge oxidation, e.g. in manifold channels and on outer edges in the sealing area of the SOC stack.

In an embodiment of the invention, the surface of the metal element is electropolished as a pretreatment step prior to the coating proces. The electropolishing proces prepares the surface of the metal element for coating and provides a smooth and more corrosion protective surface. The electropolishing also removes unwanted oxides (Si, Al) and impurities at the outermost surface layers, which otherwise could affect the electrical conductivity of the metal at high temperatures.

In a further embodiment of the invention, an entire surface of the metal element is covered with the described co-deposited particles or cathodic precipitated oxides/hydroxides. Preferably such a surface would be the surface which is subject to the described harsh oxidation environment. In a variation of this embodiment, the metal element is a plate with a first and a second side, and the first side of the plate is covered with the co-deposited particles or cathodic precipitated oxides/hydroxides, e.g. the side of a current collector plate facing the active part of the stack. In yet a further variation of the embodiment, both the first and the second side of the plate is covered with the co-deposited particles or cathodic precipitated oxides/hydroxides. In this case the metal element could be an interconnect where both sides of the interconnect is subject to the harsh oxidation conditions.

In a particular embodiment of the invention, the co-deposited particles or cathodic precipitated oxides/hydroxides form a metal ceramic coating on a part or the whole metal element.

This metal-ceramic coating is in a further embodiment a deposition of doped Cerium oxide, Cerium oxide or Cerium hydroxides in a Cobalt matrix. The doped or undoped Cerium oxide particles are co-deposited in Cobalt (Co) with e.g. electroplating methods and Cerium oxide/hydroxides is cathodic precipitated in Cobalt with e.g. electroplating methods. The transformation from metallic Cobalt to its oxides (during a first heat up in air) during oxidation is a crucial parameter to control. Adhesion of the applied metallic Cobalt layer before oxidation as well as the surface geometry is playing an important role in how the protective oxide layer is uniform, dense and adhered. The electropolishing pretreatment step, prior to the co-deposition or cathodic precipitation, has a levelling effect of the surface and also prepare it by oxide removal so optimal adhesion can be obtained. The growth of Cobalt oxides on the electropolished metal surface and electroplated Cobalt/Cerium oxide composite coating is far more continuous after oxidation than traditional pretreatment methods and therefore much better high temperature oxidation protection can be obtained when the methods are combined.

The amount of Cerium oxide or doped Cerium oxide in the metal-ceramic coating can be 0.5 - 35 weight % (wt%) or preferably 0.5 - 15 wt%.

In a further embodiment of the invention the metal coating is a deposition of any of a range suitable materials, such as pure or doped rare earth element oxides in a Cobalt matrix. Also these materials are in an amount in the metal-ceramic coating of 0.5 - 35 wt% or preferably 0.5 - 15 wt%.

In any case, the thickness of the metal-ceramic coating is 0.5 - 10 µm, preferably 0.5 - 3 µm.

The co-deposition of particles or the cathodic precipitated oxides/hydroxides in cobalt with electroplating has the further advantage that it doesn't require extra process time when coating the metal element. Numerous of different particles, oxides/hydroxides with different properties can be applied to the coating with just one process step. There is also the possibility of adjusting the coefficient of thermal expansion (CTE) to better match with steels and their respective oxides. Electropolishing can be done in the same production line as the electroplating, therefore providing an advantage in serial production for large scale manufacturing.

### Features of the invention

1. A Solid Oxide Cell stack comprising at least one metal element, wherein at least one surface of said metal element comprises co-deposited particles or oxides/hydroxides which are cathodically precipitated onto said at least one surface.
2. A Solid Oxide Cell stack according to feature 1, wherein the entire at least one surface of the at least one metal element is covered by said particles or oxides/hydroxides.
3. A Solid Oxide Cell stack according to any of the preceding features, wherein said metal element is a plate with a first and a second side, and wherein the first side is covered by said particles or oxides/hydroxides.
4. A Solid Oxide Cell stack according to feature 3, wherein also the second side of said plate is covered by said particles or oxides/hydroxides.
5. A Solid Oxide Cell stack according to any of the preceding features, wherein the at least one metal element has a metal-ceramic coating provided by said co-deposited particles or said cathodically precipitated oxides/hydroxides.
6. A Solid Oxide Cell stack according to feature 5, wherein said metal-ceramic coating is a deposition of doped Cerium oxide, Cerium oxide or Cerium hydroxides in a Cobalt matrix.
7. A Solid Oxide Cell stack according to feature 6, wherein the amount of doped Cerium oxide or undoped Cerium oxide in said metal-ceramic coating is 0.5 - 35 wt%, preferably 0.5 - 15 wt%.
8. A Solid Oxide Cell stack according to feature 5, wherein said metal-ceramic coating is a deposition of pure or doped rare earth element oxides in a Cobalt matrix.
9. A Solid Oxide Cell stack according to feature 8, wherein the amount of pure or doped rare earth element oxides in said metal-ceramic coating is 0.5 - 35 wt%, preferably 0.5 - 15 wt%.
10. A Solid Oxide Cell stack according to any of the features 5 - 9, wherein the thickness of said metal-ceramic coating is 0.5 - 10 µm, preferably 0.5 - 3 µm.
11. A Solid Oxide Cell stack according to any of the preceding features, wherein the at least one metal element is an interconnect.
12. A Solid Oxide Cell stack according to any of the features 5 - 11, wherein the surface of at least one metal element with the co-deposited particles or cathodically precipitated oxides/hydroxides is electropolished ensuring an optimum adhesion of said metal-ceramic coating.

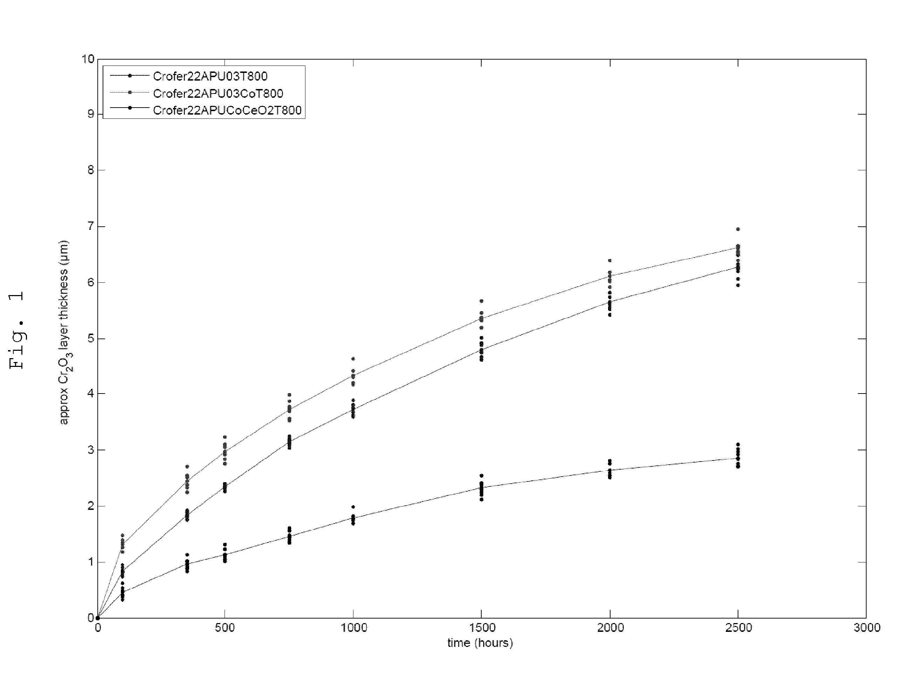

In Figure 1, a test over time of the high temperature oxidation of three interconnects is shown. One interconnect is made of the material Crofer22APU03CoT800, this is the top curve of the figure, the second interconnect is made of Crofer22APU03T800, visualized as the middle curve of the figure and the third interconnect is made of Crofer22APUCoCeO2T800. The third interconnect has a metal-ceramic coating made by metal deposition of Ceria (Ce02) in a Cobalt (Co) matrix and the surface of the interconnect has been electropolished prior to the coating.

All three interconnects have been subject to high temperature oxidation in air at app. 800°C during a time period of 2500 hours. At intervals, the thickness of the Chromium Oxide layer (Cr203) has been measured to give an indication of each interconnects ability to retard oxidation.

As can be seen on the figure, the interconnect with the metal-ceramic coating of Ceria in a Cobalt matrix according to the present invention has remarkably better resistance against oxidation: After 2500 hours the Chromium Oxide layer on the third interconnect is less than half the thickness of the Chromium Oxide layer of the other two interconnects.

## Claims

1. A Solid Oxide Cell stack comprising at least one metal element, wherein at least one surface of said metal element comprises co-deposited particles or oxides/hydroxides which are cathodically precipitated onto said at least one surface.

2. A Solid Oxide Cell stack according to claim 1, wherein the entire at least one surface of the at least one metal element is covered by said particles or oxides/hydroxides.

3. A Solid Oxide Cell stack according to any of the preceding claims, wherein said metal element is a plate with a first and a second side, and wherein the first side is covered by said particles or oxides/hydroxides.

4. A Solid Oxide Cell stack according to claim 3, wherein also the second side of said plate is covered by said particles or oxides/hydroxides.

5. A Solid Oxide Cell stack according to any of the preceding claims, wherein the at least one metal element has a metal-ceramic coating provided by said co-deposited particles or said cathodically precipitated oxides/hydroxides.

6. A Solid Oxide Cell stack according to claim 5, wherein said metal-ceramic coating is a deposition of doped Cerium oxide, Cerium oxide or Cerium hydroxides in a Cobalt matrix.

7. A Solid Oxide Cell stack according to claim 6, wherein the amount of doped Cerium oxide or undoped Cerium oxide in said metal-ceramic coating is 0.5 - 35 wt%, preferably 0.5 - 15 wt%.

8. A Solid Oxide Cell stack according to claim 5, wherein said metal-ceramic coating is a deposition of pure or doped rare earth element oxides in a Cobalt matrix.

9. A Solid Oxide Cell stack according to claim 8, wherein the amount of pure or doped rare earth element oxides in said metal-ceramic coating is 0.5 - 35 wt%, preferably 0.5 - 15 wt%.

10. A Solid Oxide Cell stack according to any of the claims 5 - 9, wherein the thickness of said metal-ceramic coating is 0.5 - 10 µm, preferably 0.5 - 3 µm.

11. A Solid Oxide Cell stack according to any of the preceding claims, wherein the at least one metal element is an interconnect.

12. A Solid Oxide Cell stack according to any of the claims 5 - 11, wherein the surface of at least one metal element with the co-deposited particles or cathodically precipitated oxides/hydroxides is electropolished ensuring an optimum adhesion of said metal-ceramic coating.
